# EUROPÄISCHE PATENTSCHRIFT

(11) **EP 1 655 523 B1**
(45) Veröffentlichungstag und Bekanntmachung des Hinweises auf die Patenterteilung: **17.10.2007**
(21) Anmeldenummer: 05016813.7
(22) Anmeldetag: 02.08.2005
(51) Int. Cl.: F16J 15/06, F16L 25/00, F16L 23/22

(54) **Dichtstruktur**
Sealing structure
Structure de joint d'étanchéité

(30) Priorität: 08.11.2004 DE 202004017221 U
(43) Veröffentlichungstag der Anmeldung: 10.05.2006
(73) Patentinhaber: HAWE Hydraulik GmbH & Co. KG, 81673 München (DE)
(72) Erfinder: Berghammer, Josef, 88427 St. Wolfgang (DE); Gißibl, Thomas, 85416 Langenbach (DE); Klemens, Harald, 81739 München (DE)
(74) Vertreter: Grünecker, Kinkeldey, Stockmair & Schwanhäusser Anwaltssozietät

(56) Entgegenhaltungen:
- FR-A- 1 240 659
- FR-A- 1 504 521
- GB-A- 577 700
- US-A- 5 566 983

## Beschreibung

Die Erfindung betrifft eine Dichtstruktur der im Oberbegriff des Anspruchs 1 angegebenen Art.

Einen Dichtrahmen, wie einen O-Ring, enthaltende Dichtstrukturen werden beispielsweise in der Hydrauliktechnik verwendet, um aufeinander ausgerichtete Druckmittelkanäle zweier mit ihren Dichtflächen direkt oder unter Zwischenlage einer Zwischenplatte gegeneinander gespannter Gehäuse in der Dichtebene fluiddicht nach außen abzudichten. Speziell in der Hochdruck-Hydraulik mit Drücken oberhalb von etwa 200 Bar neigt jedoch in der Praxis das Druckmittel (Hydraulikfluid, Öl oder Wasser) dazu, die Dichtstruktur zu überwinden. Es tritt zwar kein starker Leckagestrom auf, jedoch werden bei starken Druck- und/oder Temperaturschwankungen nach relativ kurzer Betriebsdauer die Dichtfugen durch kriechendes Druckmittel allmählich benetzt, bis schließlich Druckmittel nach außen austritt. Im Hinblick auf mittlerweile sehr hohe Umweltschutz-Anforderungen speziell beim Einsatz hydraulischer Druckmittel (Hydraulikfluid) ist damit eine nicht zu vernachlässigende Umweltverschmutzungs-Gefahr gegeben.

Bei der aus GB 57 77 00 A bekannten Dichtstruktur (Fig. 1) sind in Umfangsrichtung des Stützkragens verteilt mehrere gegenüber der Achse der Druckmittelkanäle schräge Bohrungen als Druckübertragungsstrecke vorgesehen. Jede Bohrung mündet im Abstand vom freien Ende des Dichtkragens in den Sitz des Dichtrahmens. Das Einbringen der schrägen Bohrungen ist arbeitsintensiv und erfordert hohe Präzision.

Bei der aus FR 150 45 21 A bekannten Dichtstruktur (Fig. 5, 8, 9 und 13) sind in Umfangsrichtung verteilt mehrere radial zur Achse des Druckmittelkanals verlaufende Bohrungen durch den Wurzelbereich des Stützkragens eingebracht. Die Herstellung der Bohrungen ist arbeitsintensiv und erfordert hohe Sorgfalt, insbesondere bei kleindurchmessrigen Druckmittelkanälen, weil sozusagen um die Ecke gebohrt werden muss.

Weiterer Stand der Technik ist enthalten in FR 12 40 659 A und US 5 566 983 A.

Der Erfindung liegt die Aufgabe zugrunde, eine Dichtstruktur der eingangs genannten Art zu schaffen, die auf baulich einfache und kostengünstige Weise hohe Betriebssicherheit über lange Standzeiten auch bei starken Druckschwankungen gewährleistet, und verhindert, dass hydraulisches Druckmittel in nennenswertem Maß die Dichtstruktur überwinden kann.

Die gestellte Aufgabe wird mit den Merkmalen des Anspruchs 1 gelöst.

Der Stützkragen verhindert bei Druckabfällen unerwünschte Einwärtsbewegungen des Dichtrahmens. Der Sitz und der Dichtrahmen können so dimensioniert sein, dass die Dichtzone optimal klein bleibt, in der der Druck die Dichtflächen voneinander wegdrückt. Der Kontakt zwischen dem Teil der Innenseite des Dichtrahmens und dem Stützkragen wirkt sich auf die Anpassung des Dichteffekts bei Drucksteigerungen nicht aus, da die Druckübertragungsstrecke Drucksteigerungen auch an dem dem Stützkragen zugeordneten Teil der Innenseite des Dichtrahmens und an der Unterseite des Dichtrahmens wirksam werden lässt. Die Druckmittelübertragungsstrecke ist eine in die Wand des Druckmittelkanals eingeformte Tasche, die sich mit dem Wurzelbereich des Stützkragens überschneidet. Die Tasche ist nur so groß bemessen, dass die Tragfähigkeit des Stützkragens nicht unzweckmäßig geschwächt wird. Diese Lösung ist baulich einfach und kostengünstig, da zur Herstellung der wenigstens einen Tasche Werkzeuge nutzbar sind, die im Regelfall für Bearbeitungsschritte in dieser Technologie ohnedies benutzt werden. Die Tasche lässt sich auch in einem kleindurchmessrigen Druckmittelkanal bequem formen.

Zweckmäßig sind in Umfangsrichtung des Druckmittelkanals regelmäßig verteilt mindestens zwei Taschen vorgesehen, so dass Drucksteigerungen gleichförmig auf den Dichtrahmen übertragen werden. Es können auch mehr als zwei Taschen vorgesehen sein.

Herstellungstechnisch günstig wird jede Tasche von der Innenseite der Wand des Druckmittelkanals durch den Wurzelbereich des Stützkragens eingefräst.

Dabei sollte die Tasche in Umfangsrichtung der Wand nur einen Bruchteil des Innenumfangs beanspruchen, beispielsweise wesentlich weniger als die Hälfte des Innenumfangs.

Herstellungstechnisch zweckmäßig hat die Tasche in etwa zur Achse des Druckmittelkanals radiale Seitenwände und einen konkav gerundeten Grund, der den Wurzelbereich des Stützkragens durchschneidet.

Da bei der Fertigung der Gehäuse oder in die Gehäuse einzubauende Komponenten gegebenenfalls ohnedies ein T-Fräser mit einer scheibenförmigen Fräskrone benutzt wird, wird auch die Tasche zweckmäßig mit einem T-Fräser eingeschnitten. Der Fräskronendurchmesser sollte dabei kleiner sein als die innere Weite des Druckmittelkanals bzw. als der Innendurchmesser des runden Druckmittelkanals.

Bei einer zweckmäßigen Ausführungsform beträgt der Krümmungsradius des einem Kreisbogen folgenden Grundes der Tasche zwischen etwa 75 bis 90 % des Krümmungsradius der Wand des runden Druckmittelkanals. Dadurch entsteht eine relativ großquerschnittige Fensteröffnung im Wurzelbereich des Stützkragens und bis unter die Unterseite des Dichtrahmens.

Zweckmäßig überschneidet sich der Grund der Tasche mit der senkrecht zur Achse des Druckmittelkanals gemessenen Stärkedimension des Stützkragens zu etwa 40 %.

Der Dichtrahmen ist üblicherweise ein O-Ring, ein Rundschnur-Dichtring oder auch ein Dichtring mit Vierkant- oder Quadratquerschnitt aus elastomerem Material.

Anhand der Zeichnungen werden Ausführungsformen des Erfindungsgegenstandes erläutert. Es zeigen:
- Fig. 1: einen Achsschnitt einer Ausführungsform einer Dichtstruktur,
- Fig. 2 + 3: einen Achsschnitt und einen Radialschnitt zur Verdeutlichung des Konzepts von Fig. 1, und
- Fig. 4: eine Draufsicht eines Gehäuses mit einem Bohrungsbild in einer Dichtfläche.

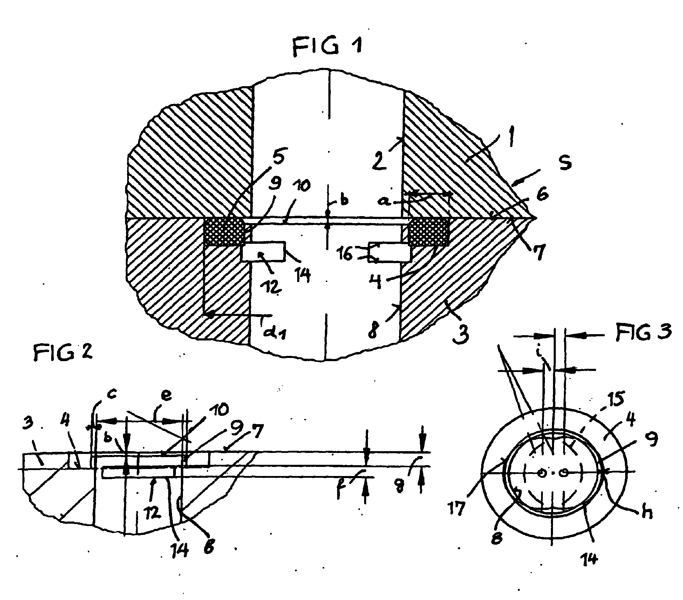

In Fig. 1 sind zwei Gehäuse 1, 3, z.B. aus Stahl, aus Legierungen, oder Leichtmetall, z.B. mit planbearbeiteten Dichtflächen 6, 7 durch nicht gezeigte Spannelemente gegeneinander gepresst. In den Gehäusen 1, 3 geformte, aufeinander ausgerichtete Druckmittelkanäle 2, 8 haben beispielsweise Kreisquerschnitt. Die Druckmittelkanäle 2, 8 könnten jedoch beliebige andere Querschnittsformen haben. Zwischen den Gehäusen 1, 3 ist um die Mündungen der Druckmittelkanäle 2, 8 eine Dichtstruktur S vorgesehen, die bei kreisrunden Druckmittelkanälen 2, 8 ebenfalls rund, bei anderen Querschnittsformen diesen Querschnittsformen angepasst ist.

In die Dichtfläche 7 des Gehäuses 3 ist konzentrisch mit dem Druckmittelkanal 8 ein Sitz 4 eingearbeitet, der zur Dichtfläche 7 offen ist. Der Sitz 4 definiert einen Außendurchmesser d1; der Dichtrahmen 5 hat eine radiale Stärke a; gerade ausreichend groß, um für die zu erwartenden Drücke, beispielsweise in der Hochdruckhydraulik oberhalb 200 Bar, einen zuverlässigen Dichteffekt zu erzielen. In den Sitz 4 ist ein Dichtrahmen 5 aus elastischem Material eingefügt und mit radialer und axialer Vor spannung gehalten, typischerweise ein O-Ring oder ein Vierkant-Dichtring. Der Sitz 4 wird zum Druckmittelkanal 8 durch einen umlaufenden Stützkragen 9 begrenzt, dessen freies Ende 10 in einem Abstand von der Dichtfläche 7 liegt. Der Stützkragen 9 ist funktionell einem Teil 11 der Innenseite des Dichtrahmens 5 zugeordnet, z.B. so, dass der Teil 11 mit radialer Vorspannung gegen den Stützkragen 9 angedrückt wird.

In das Gehäuse 3 ist im Wurzelbereich des Stützkragens 9 von der Wand des Druckmittelkanals 8 ausgehend eine Druckübertragungsstrecke 12 eingeformt, die vom Druckmittelkanal 8 z.B. zum Teil 11 der inneren Seite und zur Unterseite des Dichtrahmens 5 führt.

Der Außendurchmesser d1 und die radiale Stärke a sind so gewählt, dass sie zum Erzielen des gewünschten Dichteffekts mit einem minimalen Volumen des Dichtrahmens 5 abhängig von der Innenweite bzw. dem Innendurchmesser der Druckmittelkanäle 2, 8 eine Dichtzone mit minimaler Größe erzeugen, in der die Dichtflächen 6, 7 durch den Druck in den Druckmittelkanälen 2, 8 voneinander weggedrückt werden.

In der gezeigten Betriebskondition ist der Dichtrahmen 5 axial und zwischen der Dichtfläche 6 des Gehäuses 1 und dem Grund des Sitzes 4 und radial zwischen der Außenwand des Sitzes und dem Stützkragen 9 komprimiert. Bei einem momentanen Druckabfall verhindert der Stützkragen 9 das Einwärtsverlagern (Kaltfließen) des Dichtrahmens 5. Eine momentane Drucksteigerung in den Druckmittelkanälen 2, 8 wird über das freie Ende 10 des Stützkragens 9 entlang der Dichtfläche 6 auf den Dichtrahmen 5 übertragen, jedoch gleichzeitig auch durch die Druckübertragungsstrecke 12 zum Teil 11 der Innenseite und zur Unterseite des Dichtrahmens 5. Dadurch wird die Vorspannung des Dichtrahmens gleichförmig erhöht, so dass kein Druckmittel entlang der Oberseite des Dichtrahmens 5 und entlang der Dichtfläche 6 nach außen gelangt.

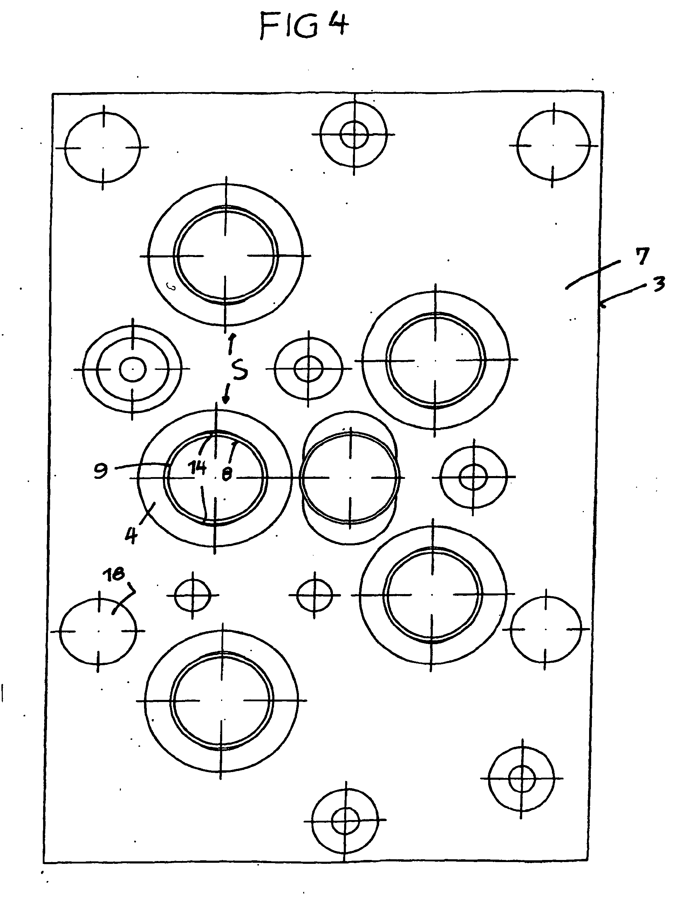

Bei der gezeigten Ausführungsform der Dichtstruktur S in Fig. 1 besteht die Druckübertragungsstrecke 12 aus mindestens einer Tasche 14, vorzugsweise aus mindestens zwei in Umfangsrichtung des Druckmittelkanals 8 verteilten Taschen 14. Die Tasche 14 hat beispielsweise zur Achse des Druckmittelkanals 8 in etwa radiale Seitenwände 16, (Fig. 1) einen konkav gerundeten (Zylindermantelabschnitt) Grund 17 (Fig. 3), und überschneidet sich so mit dem Wurzelbereich des Stützkragens 9, dass ein annähernd rechteckiges Fenster zur Innenkante des Sitzes 4 freigelegt ist.

Gemäß Fig. 2 und 3 beansprucht jede Tasche 14 nur einen Bruchteil des Innenumfangs der Wand des Druckmittelkanals 8, z.B. weniger als die Hälfte. Die radiale Stärkendimension c des Stützkragens 9 ist im Hinblick auf eine möglichst kleine Dichtzone der Dichtstruktur gering, z.B. nur 0,2 mm. Der axiale Abstand b des freien Endes 10 des Stützkragens 9 von der Dichtfläche 7 ist nur so groß, dass Drucksteigerungen problemlos durchgehen. Der Druckmittelkanal 8 ist rund mit einem Innendurchmesser e. Die Tasche 14 hat eine axiale Höhe f und ist mit ihrem oberen Seitenrand 16 in einem Abstand g von der Dichtfläche 7 positioniert.

Gemäß Fig. 3 überschneidet der Grund 17 der Tasche 14 die Innenwand des Stützkragens 9. Zweckmäßig wird die Tasche 14 mit einem T-Fräser 15 eingefräst, dessen Fräskronendurchmesser kleiner ist als der Innendurchmeser e. Zum Fräsen der beiden Taschen 14 in Fig. 8 wird der T-Fräser 15 jeweils um das Maß i relativ zur Mittelachse des Druckmittelkanals 8 versetzt.

Der Krümmungsradius des Grundes 17 der Tasche 14 beträgt etwa 75 bis 90 % des Krümmungsradius der Wand des Druckmittelkanals 8. Der Grund 17 der Tasche 14 überschneidet zu etwa 40 % die Innenwand des Stützkragens 9, bezogen auf die Stärkendimension c des Stützkragens 9 als 100 %.

Fig. 4 ist eine Draufsicht auf die Dichtfläche 7 des Gehäuses 3, von dem in den Fig. 1 bis 3 nur der Druckmittelkanal 8 gezeigt ist. Die Dichtstruktur S der Fig. 1 bis 3 (ohne den Dichtrahmen) kann bei allen Druckmittelkanälen vorgesehen sein, in denen im Betrieb hohe Drücke und starke Druckschwankungen auftreten können. Druckmittelkanäle für Steuerdruckmittel und/oder Rücklaufströme können, müssen jedoch nicht, mit ähnlichen Dichtstrukturen ausgestattet sein. Das Gehäuse 3 wird mit dem Gehäuse 1 direkt oder über eine Zwischenplatte oder mit einem anderen Block durch Befestigungselemente verspannt, für die im Gehäuse 3 Bohrungen 18 vorgesehen sind.

## Patentansprüche

1. Dichtstruktur (S) zwischen metallischen, in miteinander verbundenen Gehäusen (1, 3) Druckmittelkanäle (2, 8) umgebenden Dichtflächen (6, 7), insbesondere für die Hochdruck-Hydraulik mit Drücken höher als etwa 200 Bar, mit einem elastischen, vorgespannten Dichtrahmen (5) in einem in der Form an den Dichtrahmen (5) angepassten, eine Druckmittelkanalmündung umgebenden Sitz (4) in zumindest einer Dichtfläche (6, 7), mit einem inneren, frei endenden, gehäusefesten Stützkragen (9) für einen daran anlegbaren Teil (11) der Innenseite des Dichtrahmens (5), und mit einer den Stützkragen (9) durchsetzenden Druckübertragungsstrecke (12), wobei die Druckübertragungsstrecke (12) im Abstand vom freien Ende (10) des Stützkragens (9) im Gehäuse (3) vom Druckmittelkanal (8) bis zum Sitz (4) verläuft, **dadurch gekennzeichnet, dass** die Druckübertragungsstrecke (12) eine in die Wand des Druckmittelkanals (8) eingebrachte Tasche (14) ist, die sich mit dem Wurzelbereich des Stützkragens (9) überschneidet und den Wurzelbereich bis in den Sitz (4) durchsetzt.

2. Dichtstruktur nach Anspruch 1, **dadurch gekennzeichnet, dass** in Umfangsrichtung des Druckmittelkanals (8) regelmäßig verteilt mindestens zwei Taschen (14) vorgesehen sind.

3. Dichtstruktur nach Anspruch 1, **dadurch gekennzeichnet, dass** die Tasche (14) eingefräst ist.

4. Dichtstruktur nach Anspruch 1, **dadurch gekennzeichnet, dass** sich die Tasche (14) in Umfangsrichtung der Wand nur über einen Bruchteil des Innenumfangs erstreckt.

5. Dichtstruktur nach Anspruch 1, **dadurch gekennzeichnet, dass** die Tasche (14) in etwa zur Achse des Druckmittelkanals (8) radiale Seitenwände (16) und einen konkav gerundeten Grund (17) aufweist.

6. Dichtstruktur nach Anspruch 1, **dadurch gekennzeichnet, dass** die Tasche (14) mit der Fräskrone eines T-Fräsers (15) eingeschnitten ist, dessen Fräskronendurchmesser kleiner ist als die Innenweite des Druckmittelkanals (8), vorzugsweise kleiner ist als der Innendurchmesser (e) eines runden Druckmittelkanals (8).

7. Dichtstruktur nach Anspruch 5, **dadurch gekennzeichnet, dass** der Kmmmungsradius des Grundes (17) der Tasche (14) zwischen etwa 75 % bis 90 % des Krümmungsradius (e/2) der Wand des Druckmittelkanals (8) beträgt.

8. Dichtstruktur nach Anspruch 5, **dadurch gekennzeichnet, dass** der Grund (17) der Tasche (14) die in etwa quer zur Achse des Druckmittelkanals (8) gemessene Stärkendimension (c) des Stützkragens (9) zu etwa 40 % überschneidet.

9. Dichtstruktur nach Anspruch 1, **dadurch gekennzeichnet, dass** der Dichtrahmen (5) ein O-Ring oder ein Vierkant-Dichtring ist.

## Claims

1. Sealing structure (S) between metallic sealing faces (6, 7) which surround pressure medium ducts (2, 8) in housings (1, 3) which are connected to one another, in particular for high-pressure hydraulics with pressures of higher than approximately 200 bar, having an elastic, preloaded sealing frame (5) in a seat (4), which is matched in terms of shape to the sealing frame (5) and surrounds a pressure medium duct opening-out point, in at least one sealing face (6, 7), having an inner, free-ending support collar (9), which is fixed to the housing, for a part (11), which can be attached thereto, of the inner side of the sealing frame (5), and having a pressure transmission path (12) which extends through the support collar (9), wherein the pressure transmission path (12) runs in the housing (3), with a spacing from the free end (10) of the support collar (9), from the pressure medium duct (8) to the seat (4), **characterized in that** the pressure transmission path (12) is a pocket (14) which is formed in the wall of the pressure medium duct (8) and which overlaps the root region of the support collar (9) and extends through the root region into the seat (4).

2. Sealing structure according to Claim 1, **characterized in that** at least two pockets (14) are provided so as to be distributed uniformly in the peripheral direction of the pressure medium duct (8).

3. Sealing structure according to Claim 1, **characterized in that** the pocket (14) is milled in.

4. Sealing structure according to Claim 1, **characterized in that** the pocket (14) extends only over a fraction of the inner periphery in the peripheral direction of the wall.

5. Sealing structure according to Claim 1, **characterized in that** the pocket (14) has side walls (16), which are approximately radial with respect to the axis of the pressure medium duct (8), and a concavely rounded base (17).

6. Sealing structure according to Claim 1, **characterized in that** the pocket (14) is cut in using the milling crown of a T-shaped milling cutter (15) whose milling crown diameter is smaller than the inner width of the pressure medium duct (8), preferably smaller than the inner diameter (e) of a round pressure medium duct (8).

7. Sealing structure according to Claim 5, **characterized in that** the radius of curvature of the base (17) of the pocket (14) is between approximately 75% and 90% of the radius of curvature (e/2) of the wall of the pressure medium duct (8).

8. Sealing structure according to Claim 5, **characterized in that** the base (17) of the pocket (14) overlaps the thickness dimension (c), as measured approximately transversely with respect to the axis of the pressure medium duct (8), of the support collar (9) by approximately 40%.

9. Sealing structure according to Claim 1, **characterized in that** the sealing frame (5) is an O-ring or a square sealing ring.

## Revendications

1. Structure de joint d'étanchéité (S) entre des portées de joint (6, 7) métalliques entourant des canaux d'agent sous pression (2, 8) dans des carters (1, 3) assemblés entre eux, en particulier pour l'hydraulique à haute pression avec des pressions de plus d'environ 200 bars, comprenant un cadre d'étanchéité (5) élastique, précontraint, dans un siège (4) entourant un débouché du canal d'agent sous pression, adapté dans la forme au cadre d'étanchéité (5), dans au moins une portée de joint (6, 7), un collet d'appui (9) intérieur, solidaire du carter et avec des extrémités libres, pour une partie (11) applicable sur ce dernier du côté intérieur du cadre d'étanchéité (5), et un parcours de transmission de pression (12) qui traverse le collet d'appui (9), le parcours de transmission de pression (12) s'étendant à distance de l'extrémité libre (10) du collet d'appui (9) dans le carter (3) du canal d'agent sous pression (8) jusqu'au siège (4), **caractérisée en ce que** le parcours de transmission de pression (12) est une poche (14) pratiquée dans la paroi du canal d'agent sous pression (8), laquelle poche se recoupe avec la zone de racine du collet d'appui (9) et traverse la zone de racine jusqu'au siège (4).

2. Structure de joint d'étanchéité suivant la revendication 1, **caractérisée en ce qu'**au moins deux poches (14), réparties régulièrement dans la direction périphérique du canal d'agent sous pression (8), sont prévues.

3. Structure de joint d'étanchéité suivant la revendication 1, **caractérisée en ce que** la poche (14) est fraisée.

4. Structure de joint d'étanchéité suivant la revendication 1, **caractérisée en ce que** la poche (14) ne s'étend dans la direction périphérique de la paroi que sur une fraction du pourtour intérieur.

5. Structure de joint d'étanchéité suivant la revendication 1, **caractérisée en ce que** la poche (14) présente des parois latérales (16) à peu près radiales par rapport à l'axe du canal d'agent sous pression (8) et un fond (17) d'arrondi concave.

6. Structure de joint d'étanchéité suivant la revendication 1, **caractérisée en ce que** la poche (14) est découpée par la couronne d'une fraise en T (15), dont le diamètre de couronne est plus petit que la largeur intérieure du canal d'agent sous pression (8), de préférence plus petit que le diamètre intérieur (e) d'un canal d'agent sous pression (8) rond.

7. Structure de joint d'étanchéité suivant la revendication 5, **caractérisée en ce que** le rayon de courbure du fond (17) de la poche (14) est compris entre environ 75% à 90% du rayon de courbure (e/2) de la paroi du canal d'agent sous pression (8).

8. Structure de joint d'étanchéité suivant la revendication 5, **caractérisée en ce que** le fond (17) de la poche (14) recoupe à environ 40% la dimension d'épaisseur (c) du collet d'appui (9), mesurée à peu près transversalement à l'axe du canal d'agent sous pression (8).

9. Structure de joint d'étanchéité suivant la revendication 1, **caractérisée en ce que** le cadre d'étanchéité (5) est un joint torique ou une bague d'étanchéité carrée.
